# EUROPEAN PATENT APPLICATION

(11) **EP 2 960 739 A2**
(43) Date of publication of application: **30.12.2015**
(21) Application number: 14192746.7
(22) Date of filing: 12.11.2014
(51) Int. Cl.: G05B 19/42, B25J 9/16

(54) **Teaching system, robot system, and teaching method**

(30) Priority: 27.06.2014 JP 2014132700
(71) Applicant: Kabushiki Kaisha Yaskawa Denki, Kitakyushu-shi, Fukuoka 806-0004 (JP)
(72) Inventor: Maeda, Takahiro, Kitakyushu-shi, Fukuoka 806-0004 (JP)
(74) Representative: Grünecker Patent- und Rechtsanwälte PartG mbB

(57) **Abstract**

A teaching system (30) according to embodiments includes a data acquiring unit (311d) and a job generating unit (311e). The data acquiring unit (311d) acquires data including an initial attitude of a tool (25), a final attitude of the tool (25), a rotation center axis of a handled object, and a rotation angle of the handled object about the rotation center axis, in a robot (20) that performs an operation of holding and rotating the handled object with the tool (25). Based on the data acquired by the data acquiring unit (311d), the job generating unit (311e) generates a job program that operates the actual robot (20) so that the tool (25) is brought into the initial attitude, and then brought into the final attitude after the handled object is rotated by the rotation angle about the rotation center axis.

## Description

### FIELD

The embodiments discussed herein are directed to a teaching system, a robot system, and a teaching method therefor.

### BACKGROUND

Robots have heretofore been known that have a tool, such as a hand, installed thereon and perform a predetermined operation on a handled object with the tool. Various teaching systems have also been developed that teach such robots movements for performing the predetermined operation.

Examples of the predetermined operation mentioned above include, but are not limited to, operations, such as an arc welding operation and an operation of grinding a workpiece, in which the tool moves in a circular arc shape. In a teaching system, in the case of the operations described above, a user teaches a robot, for example, a start point, an end point, and a reference point of the tool, then a circular interpolation is performed between the start point and the end point, and a job program for operating the robot is generated (refer to Japanese Patent Application Laid-open No. H04-118706, for example).

However, in the above-mentioned teaching system, there have been cases in which the operation of the user to teach the robot is troublesome when the predetermined operation is an operation of holding and rotating the handled object with the tool. Specifically, there have been cases in which the teaching operation of the user is troublesome when the predetermined operation is an operation in which the tool holds a spatula (handled object) and rotates it in a petri dish to scrape a specimen off the petri dish with the spatula, or an operation in which the tool holds and rotates a test tube (handled object) to stir a specimen in the test tube.

More specifically, for example, when the tool rotates the test tube, the specimen in the test tube can be efficiently stirred by rotating the test tube while gradually changing the inclination of the test tube with respect to the direction of the gravitational force. Hence, in the above-mentioned teaching system, the teaching to the robot has been performed for each attitude of the tool, for example, by first teaching the start point, the end point, and the like of the tool when the longitudinal direction of the test tube is parallel to the direction of the gravitational force, and then teaching again the start point, the end point, and the like of the tool when the test tube is slightly inclined. This increases the number of times of the teaching, and has, in some cases, resulted in a troublesome teaching work.

In view of the description given above, it is an object of an aspect of the embodiments to provide a teaching system, a robot system, and a teaching method therefor that can facilitate the operation of teaching the robot.

### SUMMARY

A teaching system according to an aspect of embodiments includes a data acquiring unit and a job generating unit. The data acquiring unit acquires data including an initial attitude of a tool, a final attitude of the tool, a rotation center axis of a handled object, and a rotation angle of the handled object about the rotation center axis, in a robot that performs an operation of holding and rotating the handled object with the tool. Based on the data acquired by the data acquiring unit, the job generating unit generates a job program that operates the actual robot so that the tool is brought into the initial attitude, and then brought into the final attitude after the handled object is rotated by the rotation angle about the rotation center axis.

According to the aspect of the embodiments, the operation of teaching the robot can be facilitated.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:
FIG. 1A is an explanatory diagram illustrated as a front view of a robot system including a teaching system according to a first embodiment;
FIG. 1B is an explanatory diagram illustrated as a top view of the robot system illustrated in FIG. 1A;
FIG. 2 is a top view illustrating a configuration of a robot;
FIG. 3 is a block diagram of the teaching system.
FIG. 4 is an explanatory diagram of specific processing in a teaching control device and a teaching operation of a user;
FIGS. 5A to 5E are explanatory diagrams for explaining movements of the robot;
FIG. 6 is a flowchart illustrating a procedure of processing executed by the teaching system;
FIG. 7 is an explanatory diagram for explaining setting of initial data performed before the user starts the teaching operation in a teaching system according to a second embodiment;
FIG. 8 is an explanatory diagram of the teaching operation of the user in an operation of stirring a test tube;
FIGS. 9A to 9D are explanatory diagrams for explaining movements of the robot;
FIG. 10 is an explanatory diagram for explaining the setting of initial data performed before the user starts the teaching operation in a teaching system according to a third embodiment;
FIG. 11 is an explanatory diagram of the teaching operation of the user in an operation of stirring a beaker; and
FIGS. 12A to 12C are explanatory diagrams for explaining movements of the robot.

### DESCRIPTION OF EMBODIMENTS

A first embodiment will be first described.

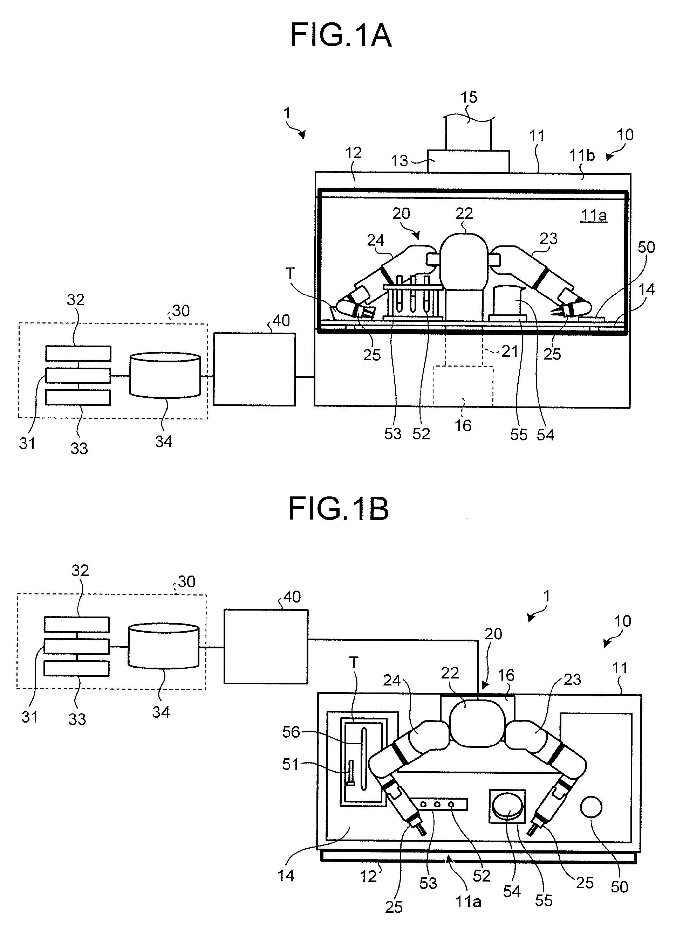

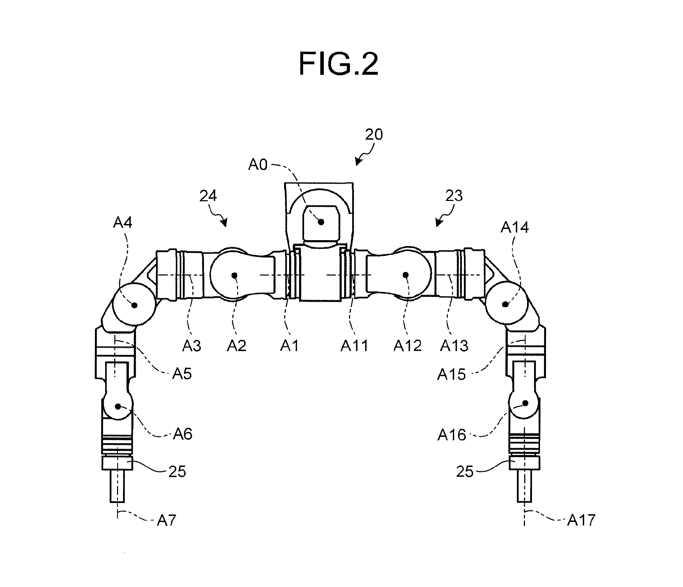

FIG. 1A is an explanatory diagram illustrated as a front view of a robot system including a teaching system according to the first embodiment. FIG. 1B is an explanatory diagram illustrated as a top view of the robot system illustrated in FIG. 1A. For ease of understanding, FIG. 1B illustrates a state in which a ceiling of a chamber body (to be described later) is removed. FIGS. 1A and 1B, and FIG. 2 and subsequent figures to be explained later, are all schematic diagrams.

As illustrated in FIGS. 1A and 1B, a robot system 1 includes a draft chamber 10, a robot 20, a teaching system 30, and a robot control device 40.

In the robot system 1, the robot control device 40 controls the robot 20 according to the content of teaching provided by a user via the teaching system 30 to perform operations using various instruments (such as test tubes) in the draft chamber 10.

The robot system 1 can be used for various operations, and is preferably used for operations in the biomedical field, such as an operation of rotating a spatula in a petri dish to scrape a specimen off the petri dish and an operation of rotating a test tube to stir a specimen in the test tube. The following describes components included in the robot system 1 in detail.

The draft chamber 10 includes a chamber body 11, a door 12, and an air suction unit 13. The chamber body 11 is a rectangular cuboid-shaped housing, the inside of which serves as a workspace of the robot 20. The chamber body 11 is provided, in the front sidewall thereof, with an opening 11a that communicates the internal space (workspace) with the external space.

The door 12 is made of, for example, a frame body having a rectangular shape in the front view and toughened glass that is set on the inner peripheral surface of the frame body and that is translucent enough so that the inside of the door 12 is visible from the outside thereof.

The door 12 is mounted in the opening 11a, and is configured to be liftable and lowerable. As a result, lowering the door 12 as illustrated in FIG. 1A closes the opening 11a, and turns the inside of the chamber body 11 into a closed space isolated from the outside. While not illustrated, lifting the door 12 opens the opening 11a.

The inside of the chamber body 11 is provided with a top panel 14 that serves as a work table. The various instruments used for the operations performed by the robot 20 are arranged on top of the top panel 14. Specifically, as well illustrated in FIG. 1B, a petri dish 50, a spatula 51 for use with the petri dish 50, test tubes 52, a test tube stand 53 for holding the test tubes 52, a beaker 54, a placing table 55 for placing the beaker 54 thereon, and a stirrer bar 56 for use with the beaker 54 are arranged on top of the top panel 14. The spatula 51 and the stirrer bar 56 are placed on a tray T. The petri dish 50, the test tubes 52, and the beaker 54 contain a specimen S (not illustrated in either FIG. 1A or 1B), such as a chemical.

The various instruments, such as the petri dish 50, the spatula 51, the test tubes 52, and the stirrer bar 56, are "handled objects" that are targets of operation of the robot 20, as will be described later. Hence, in the following description, each of the various instruments, such as the petri dish 50 and the spatula 51, may be called a "handled object".

As illustrated in FIG. 1A, the air suction unit 13 is, for example, a fan that is provided at a ceiling 11b of the chamber body 11 and sucks air from inside the chamber body 11. The air sucked by the air suction unit 13 is discharged, for example, outdoors, via an air filter (not illustrated), such as a high-efficiency particulate air (HEPA) filter, and an exhaust air duct 15. Sucking the air with the air suction unit 13 from inside the chamber body 11 in this manner keeps the inside of the workspace at a negative pressure, and can thereby prevent substances and the like produced during the work from externally diffusing.

While the robot system 1 includes the draft chamber 10 in the above description, this is merely an example, and the present embodiment is not limited to this example. In other words, the robot system 1 may have a configuration that does not include the draft chamber 10, and specifically, the workspace above the top panel 14 may be, for example, open to the atmosphere.

The robot 20 is installed on an installation table 16 provided on the floor surface of the chamber body 11. The robot 20 is what is called a dual-arm robot that has a base 21 and a trunk 22, with left and right arms 23 and 24 attached to both shoulders of the trunk 22. Each of the left and the right arms 23 and 24 is a multi-axis robot including a plurality of joint axes. The trunk 22 of the robot 20 is connected to the base 21 via an actuator (not illustrated), and is rotatable relative to the base 21 by the actuator.

A rotation axis of the actuator and the joint axes in the robot 20 will be described using FIG. 2. FIG. 2 is a top view illustrating the configuration of the robot 20.

As illustrated in FIG. 2, the base 21 and the trunk 22 are connected to each other so as to be relatively rotatable about a rotation axis A0. The rotation axis A0 is set in a direction substantially orthogonal to the installation surface of the installation table 16 on which the base 21 is installed.

The trunk 22 and the left arm 23 are connected to each other so as to be rotatable about a rotation axis All, and trunk 22 and the right arm 24 are connected to each other so as to be rotatable about a rotation axis A1. Each of the rotation axes A1 and A11 is in a direction orthogonal to the rotation axis A0.

As described above, each of the left and the right arms 23 and 24 is a multi-axis robot having a plurality of joint axes, and includes seven rotation axes (joint axes), including the rotation axis A1 or A11, and joints rotatable about the rotation axes.

The left arm 23 is configured such that a rotation axis A12 is orthogonal to the rotation axis A11; a rotation axis A13 is orthogonal to the rotation axis A12; a rotation axis A14 is orthogonal to the rotation axis A13; a rotation axis A15 is orthogonal to the rotation axis A14; a rotation axis A16 is orthogonal to the rotation axis A15; and a rotation axis A17 is orthogonal to the rotation axis A16. The right arm 24 is configured such that a rotation axis A2 is orthogonal to the rotation axis A1; a rotation axis A3 is orthogonal to the rotation axis A2; a rotation axis A4 is orthogonal to the rotation axis A3; a rotation axis A5 is orthogonal to the rotation axis A4; a rotation axis A6 is orthogonal to the rotation axis A5; and a rotation axis A7 is orthogonal to the rotation axis A6.

The expression "orthogonal to" used above and expressions "parallel to" and "meet at a right angle" to be used below need not be mathematically accurate, but are allowed to include practical tolerances or errors.

The tips of the left and the right arms 23 and 24 are each provided with a hand 25 that can hold (grip) an instrument, such as the spatula 51, a test tube 52, or a stirrer bar 56. The hand 25 is an example of a "tool" used by the robot 20 for performing operations, but the tool is not limited to the hand 25. In other words, the tool included in the robot 20 only needs to be configured to be capable of holding the various instruments, and may be, for example, a suction holding unit that sucks and holds the test tube 52 or the like.

Each of the above-mentioned joints of the robot 20 is equipped with an actuator, such as a servomotor (not illustrated), which rotationally drives the joint of the robot 20 based on a movement directive from the robot control device 40.

Coming back to the description of FIGS. 1A and 1B, the teaching system 30 includes a teaching control device 31, a display unit 32, an operating unit 33, and a job information database (DB) 34. According to the content of teaching provided by the user via the operating unit 33, the teaching system 30 generates a job program that operates the actual robot 20. The configuration of the teaching system 30 will be described later in detail.

The robot control device 40 controls movements of the robot 20 based on the job program generated by the teaching system 30.

In the teaching system 30, in some cases, the user teaches an operation, such as an operation of holding and rotating the spatula 51 in the petri dish 50 with the hand 25 to scrape the specimen S off the petri dish 50 or an operation of holding and rotating the test tube 52 with the hand 25 to stir the specimen S in the test tube 52.

In the above-mentioned operation of rotating the handled object (workpiece), such as the spatula 51 or the test tube 52, rotating the handled object while gradually tilting it can efficiently scrape off or stir the specimen S. When the handled object is rotated while being gradually tilted, conventional teaching systems require the teaching to the robot to be performed for each attitude of the hand while changing the attitude of the hand. This increases the number of times of the teaching, and has, in some cases, resulted in a troublesome teaching operation of the user.

Hence, the teaching system 30 of the robot system 1 according to the present embodiment is configured to be capable of facilitating the operation of teaching the robot 20. The following describes the teaching system 30 in detail.

The teaching control device 31 of the teaching system 30 is a controller that controls the entire teaching system 30, and includes, for example, an arithmetic processing unit and a storage unit. The teaching control device 31 is connected to various devices, such as the display unit 32, of the teaching system 30 so as to be capable of transmitting information to each other.

The teaching control device 31 outputs, to the display unit 32, a virtual image including a result obtained by simulating the movements of the robot 20 based on operations of the user via the operating unit 33. Specific examples of the virtual image include, but are not limited to, a graphic image of a three-dimensional model of the robot 20 and the handled object.

The display unit 32 is a display device, such as what is called a display. The operating unit 33 corresponds to input devices, such as a mouse and a keyboard. The operating unit 33 need not be configured as hardware components, but may be configured as software components, such as a touch key displayed on a touch panel display.

The job information DB 34 is a database in which information on the teaching, such as the job program for operating the robot 20, is registered. The job information DB 34 is connected to the robot control device 40 serving as a controller for controlling the movements of the actual robot 20 so as to be capable of transmitting information to each other. The robot control device 40 controls the movements of the robot 20 based on the job program registered in the job information DB 34.

While the job information DB 34 provided in the teaching system 30 is connected to the robot control device 40 in FIGS. 1A and 1B, the job information DB 34 need not be connected to the robot control device 40.

Possible configurations of not connecting the job information DB 34 to the robot control device 40 include a configuration in which the job program generated by the teaching system 30 is stored in a certain storage unit (not illustrated) in the robot control device 40. Specifically, the job program generated by the teaching system 30 is copied to a medium, such as a universal serial bus (USB) memory, which is then connected to the robot control device 40 to store the job program into the certain storage unit (not illustrated) in the robot control device 40 through a certain operation.

From the viewpoint of facilitating the understanding of the description, FIGS. 1A and 1B illustrate an example of configuring the job information DB 34 and the teaching control device 31 as separate bodies. However, the information stored in the job information DB 34 may be stored in a storage unit in the teaching control device 31.

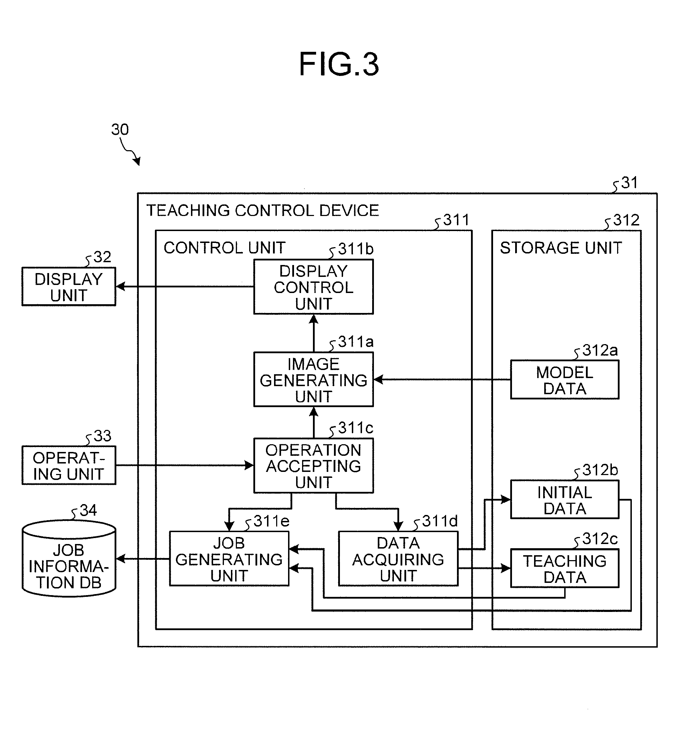

The following describes the block configuration of the teaching system 30 according to the embodiments using FIG. 3. FIG. 3 is a block diagram of the teaching system 30. FIG. 3 illustrates only components necessary for describing the teaching system 30 while omitting descriptions on general components.

The description using FIG. 3 mainly focuses on the internal configuration of teaching control device 31, and only brief description will be given on the display unit 32, the operating unit 33, and the job information DB 34, which have been already illustrated using FIGS. 1A and 1B.

As illustrated in FIG. 3, the teaching control device 31 includes a control unit 311 and a storage unit 312. The control unit 311 includes an image generating unit 311a, a display control unit 311b, an operation accepting unit 311c, a data acquiring unit 311d, and a job generating unit 311e. The storage unit 312 is a storage device, such as a hard disk drive or a nonvolatile memory, and stores model data 312a, initial data 312b, and teaching data 312c.

Based on the model data 312a, the image generating unit 311a generates a virtual image of the robot system 1 including the robot 20 and the handled object. The model data 312a is information including drawing information that is predefined for the robot 20, the hand (tool) 25, and each type of the handled object.

The image generating unit 311a outputs the generated virtual image to the display control unit 311b. The display control unit 311b displays the virtual image received from the image generating unit 311a on the display unit 32.

The operation accepting unit 311c accepts various types of input operations of the user entered via the operating unit 33, and, according to the type of an input operation, outputs signals according to the operation to the image generating unit 311a, the data acquiring unit 311d, and the job generating unit 311e.

The operation accepting unit 311c also accepts an operation to store data entered in advance prior to the teaching operation of the user as the initial data 312b in the storage unit 312 (herein after, called an "initial setting operation"). The operation accepting unit 311c further accepts an operation to store data entered by the teaching operation of the user as the teaching data 312c in the storage unit 312 (hereinafter, called a "teaching setting operation"). The operation accepting unit 311c outputs signals according to the accepted initial setting operation and teaching setting operation to the data acquiring unit 311d. The initial setting operation is an input operation performed, for example, by an initial setting operator, and the teaching setting operation is an input operation performed, for example, by the user.

After receiving a signal according to the initial setting operation from the operation accepting unit 311c, the data acquiring unit 311d stores data (such as data representing, for example, a world coordinate system to be described later) acquired when the signal was received, as the initial data 312b, in the storage unit 312. After receiving a signal according to the teaching setting operation from the operation accepting unit 311c, the data acquiring unit 311d stores data (such as data representing, for example, a final attitude of the hand 25 to be described later) acquired when the signal was received, as the teaching data 312c, in the storage unit 312. As described above, the data acquiring unit 311d corresponds to means for acquiring the data.

After receiving an operation signal instructing generation of a job from the operation accepting unit 311c, the job generating unit 311e generates a job program for operating the actual robot 20 based on the initial data 312b and the teaching data 312c, and registers the job program in the job information DB 34. As described above, the job generating unit 311e corresponds to means for generating.

The description using FIG. 3 has illustrated the case in which the teaching control device 31 generates the virtual image including the robot 20 based on the pre-registered model data 312a. However, the embodiments are not limited to this, but the teaching control device 31 may sequentially acquire information necessary for generating the image from a higher-level device connected so as to be capable of intercommunicating with the teaching control device 31.

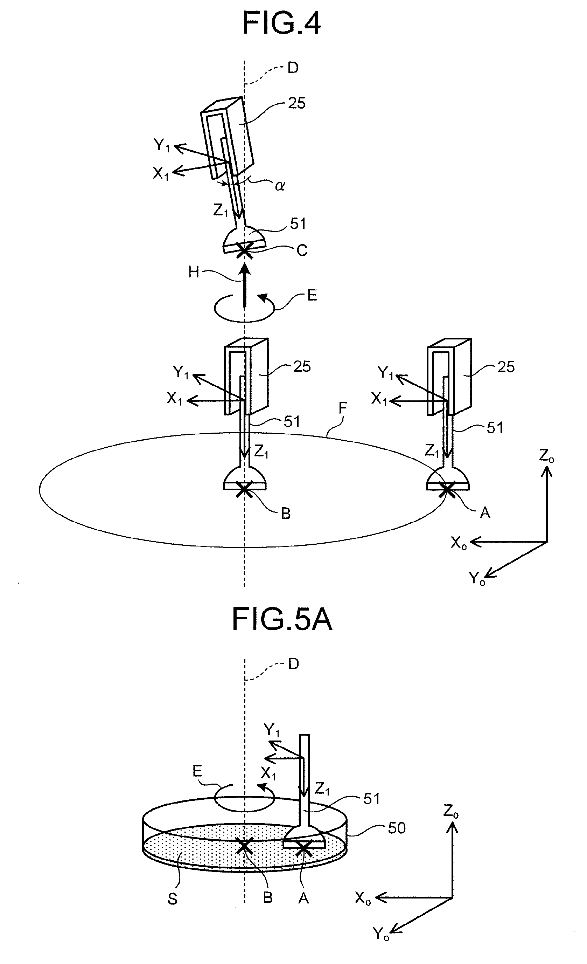

The following describes specific processing in the teaching control device 31 configured as described above and the teaching operation of the user, with reference to FIG. 4. FIG. 4 is an explanatory diagram of the specific processing in the teaching control device 31 and the teaching operation of the user.

The following description will be given of an example of an operation of scraping the specimen S off the petri dish 50 using the spatula 51 as a handled object (hereinafter, may be called a "scraping operation"). FIG. 4 illustrates the virtual image displayed on the display unit 32, and omits the illustration of the left and the right arms 23 and 24, and the like, so as to simplify the diagram.

First, before the teaching operation of the user, the initial setting operator sets (defines) the world coordinate system in advance. As illustrated in FIG. 4, the world coordinate system is a three-dimensional coordinate system represented by X₀, Y₀, and Z₀, and is a coordinate system representing an entire space in which the robot 20 is disposed.

The setting of the world coordinate system will be described in detail. After the initial setting operator operates the operating unit 33 and enters data representing the world coordinate system, the data acquiring unit 311d acquires the data representing the world coordinate system. Then, after receiving the signal according to the initial setting operation of the initial setting operator from the operation accepting unit 311c, the data acquiring unit 311d stores the acquired data representing the world coordinate system as the initial data 312b in the storage unit 312. This initially sets the world coordinate system (X₀, Y₀, Z₀).

After the initial data 312b is stored in the storage unit 312, the user performs the operation to teach the robot 20. Specifically, as illustrated in FIG. 4, in the virtual image displayed on the display unit 32, the user moves the hand 25 so as to position the tip of the spatula 51 at a desired start point A, and brings the hand 25 into an initial attitude at the start point A.

The start point A of the spatula 51 refers to a first position of the spatula 51 desired in the scraping operation. The initial attitude of the hand 25 refers to an attitude of the hand 25 desired when the scraping operation starts, and is represented using a tool coordinate system that is a three-dimensional coordinate system represented by X₁, Y₁, and Z₁. The X₁-, Y₁-, and Z₁-axes are set in the tool coordinate system, according to the type of the tool (here, the hand 25).

The initial attitude of the hand 25 includes a tilt angle of the Z₁-axis direction of the hand 25 with respect to the Z₀-axis direction. Specifically, in the example of FIG. 4, the tilt angle of the Z₁-axis direction of the hand 25 is set to 0 degrees with respect to the Z₀-axis direction. In other words, the initial attitude of the hand 25 is set to an attitude in which the Z₁-axis direction is parallel to the Z₀-axis direction.

The data acquiring unit 311d acquires data representing the start point A of the spatula 51 and the initial attitude of the hand 25. Then, after receiving the signal according to the teaching setting operation of the user from the operation accepting unit 311c, the data acquiring unit 311d stores the acquired data representing the initial attitude of the hand 25 and the like, as the teaching data 312c, in the storage unit 312.

Then, in the virtual image displayed on the display unit 32, the user moves the hand 25 so as to position the tip of the spatula 51 at a desired rotation center point B. The rotation center point B of the spatula 51 refers to a position serving as a rotation center of the spatula 51 that rotates during the scraping operation.

The data acquiring unit 311d acquires data representing the rotation center point B of the spatula 51. Then, after receiving the signal according to the teaching setting operation of the user from the operation accepting unit 311c, the data acquiring unit 311d stores the acquired data representing the rotation center point B of the spatula 51 as the teaching data 312c in the storage unit 312.

The user then teaches a rotation center axis D and the final attitude of the hand 25 that are desired. Specifically, in the virtual image displayed on the display unit 32, the user moves the hand 25 so as to position the tip of the spatula 51 at an arbitrary point C other than the start point A and the rotation center point B, and brings the hand 25 into the final attitude at the arbitrary point C.

The arbitrary point C refers to a point for teaching the rotation center axis D of the spatula 51 used when the scraping operation is performed. More in detail, an axis obtained by connecting the rotation center point B of the spatula 51 and the arbitrary point C is taught to be the rotation center axis D of the spatula 51. The arbitrary point C may be called a "rotation center axis teaching point C" below because the arbitrary point C is a point for teaching the rotation center axis D as described above.

Each of the start point A, the rotation center point B, and the rotation center axis teaching point C is a teaching position for teaching the movements of the robot 20, and is also a control point that serves as a place to be controlled. In the above description, the control point is set at the tip of the spatula 51, as an example. This allows the spatula 51 to be prevented from interfering with a side face or the like of the petri dish 50, for example, when the tip of the spatula 51 moves along a circular arc in the scraping operation.

The final attitude of the hand 25 mentioned above refers to an attitude of the hand 25 that is desired when the scraping operation is finished, and is represented using the tool coordinate system (X₁, Y₁, Z₁).

The final attitude of the hand 25 includes a tilt angle α of the Z₁-axis direction of the hand 25 with respect to the Z₀-axis direction, in the same manner as the initial attitude. Specifically, in the example of FIG. 4, the tilt angle α of the Z₁-axis direction of the hand 25 is set to 10 degrees with respect to the Z₀-axis direction.

The data acquiring unit 311d acquires data representing the rotation center axis D of the spatula 51 and the final attitude of the hand 25. Then, after receiving the signal according to the teaching setting operation of the user from the operation accepting unit 311c, the data acquiring unit 311d stores the acquired data representing the rotation center axis D of the spatula 51 and the final attitude of the hand 25, as the teaching data 312c, in the storage unit 312.

In the initial and the final attitudes of the hand 25 described above, the tilt angles of the Z₁-axis direction are set to 0 degrees and 10 degrees, respectively, with respect to the Z₀-axis direction. However, these tilt angles are merely examples, and can be set to any values. While the teaching has been described above to be performed in the order of the start point A, the rotation center point B, and the rotation center axis teaching point C, the order of teaching is not limited to this.

While the final attitude of the hand 25 has been described above to be taught at the rotation center axis teaching point C, the final attitude is not limited to be taught at this point. Specifically, the final attitude of the hand 25 may be taught, for example, at the rotation center point B. The final attitude of the hand 25 may even be taught at any other point than the start point A, the rotation center point B, and the rotation center axis teaching point C.

A rotation direction E of the spatula 51 is also taught at the rotation center axis teaching point C. Specifically, let a reference numeral F indicate a plane that includes the start point A and the rotation center point B and meets the rotation center axis D at a right angle, and assume the positive direction of a normal vector H to be directed upward in FIG. 4 on the line (rotation center axis) D orthogonal to the plane F shaped in a circular arc; then, a rotation direction E is defined as the right-turn direction toward the positive direction (right-handed screw direction) of the normal vector H.

The positive direction of the normal vector H has been described above to be directed upward in FIG. 4 because the rotation center axis teaching point C lies above the plane F. If, in contrast, the rotation center axis teaching point C lies below the plane F, the positive direction of the normal vector H is directed downward in FIG. 4, and the rotation direction E is defined as the direction opposite to the rotation direction illustrated in FIG. 4 (that is, the clockwise direction).

The data acquiring unit 311d acquires data representing the rotation direction E of the spatula 51, and stores the acquired data as the teaching data 312c in the storage unit 312.

While the rotation direction E of the spatula 51 has been described above to be taught at the rotation center axis teaching point C, the rotation direction E is not limited to be taught at this point. Specifically, for example, the rotation direction E may be set in advance by the initial setting operator before the teaching operation of the user, and the data representing the rotation direction E may be stored as the initial data 312b in the storage unit 312.

The user further enters a desired rotation angle of the spatula 51 about the rotation center axis D via the operating unit 33. The rotation angle of the spatula 51 about the rotation center axis D refers to a rotation angle of the spatula 51 to be rotated from the start until the end of the scraping operation.

The rotation angle of the spatula 51 is set to, for example, 720 degrees here. The rotation angle of the spatula 51 can be set to any value, but preferably to 360 degrees or larger. Setting the rotation angle of the spatula 51 to 360 degrees or larger allows the specimen S in the petri dish 50 to be evenly and entirely scraped off by the spatula 51.

A number of rotations of the spatula 51 may be entered instead of the rotation angle of the spatula 51. Specifically, in the above-described example, the number of rotations of the spatula 51 may be set to two, instead of setting the rotation angle of the spatula 51 to 720 degrees.

The data acquiring unit 311d acquires the rotation angle (here, 720 degrees) taught by the user as data representing the rotation angle of the spatula 51, and stores the acquired data as the teaching data 312c in the storage unit 312.

In this manner, the data acquiring unit 311d acquires the data including, for example, the initial attitude of the hand 25, the final attitude of the hand 25, the rotation center axis D of the spatula 51, and the rotation angle of the spatula 51 about the rotation center axis D.

For ease of understanding, in the example illustrated in FIG. 4, the teaching operation is performed using the virtual image of the hand 25 holding the spatula 51. However, not limited to this example, the teaching operation may be performed using a virtual image of the hand 25 not holding the spatula 51.

Subsequently, based on the data acquired by the data acquiring unit 311d, more specifically, based on the initial data 312b and the teaching data 312c, the job generating unit 311e generates a job program that operates the actual robot 20.

More in detail, based on the initial data 312b and the teaching data 312c, the job generating unit 311e generates the job program so that the hand 25 is brought into the initial attitude, and then brought into the final attitude after the spatula 51 is rotated about the rotation center axis D in the rotation direction E by a rotation angle (here, by 720 degrees).

In this case, the job generating unit 311e generates the job program so that the attitude of the hand 25 uniformly changes with the angle of rotation while the attitude changes from the initial attitude to the final attitude. Specifically, in the above-described example, the tilt angle of the hand 25 is set to 5 degrees, which corresponds to 50% of the tilt angle α in the final attitude, when the spatula 51 has rotated by 360 degrees, which corresponds to 50% of the rotation angle; and the tilt angle of the hand 25 is set to 10 degrees, which corresponds to 100% of the tilt angle α in the final attitude, when the spatula 51 has rotated by 720 degrees, which corresponds to 100% of the rotation angle.

The job generating unit 311e generates the job program so as to rotate the spatula 51 in the plane F serving as an area for rotation of the spatula 51 that includes the start point A and the rotation center point B and meets the rotation center axis D at a right angle.

This can operate the actual robot 20 so that the spatula 51 held by the hand 25 of the actual robot 20 starts the scraping operation from the start point A desired by the user, and rotates in the plane F.

The spatula 51 has been described above to rotate in the plane F. However, not limited to this, the spatula 51 may rotate in a plane parallel to the plane F.

The job program generated by the job generating unit 311e is registered in the job information DB 34. After the teaching operation, the robot control device 40 can control movements of the robot 20 based on the registered job program.

A description will be given of the movements of the robot 20 controlled according to the above-described content of the teaching given by the teaching system 30, using FIGS. 5A to 5E. FIGS. 5A to 5E are explanatory diagrams for explaining the movements of the robot 20 based on the job program described above. To simplify the illustrations, FIGS. 5A to 5E illustrate only the tool coordinate system while omitting the illustration of the hand 25.

First, as illustrated in FIG. 5A, the hand 25 holding the spatula 51 is brought into the initial attitude at the start point A. Thereafter, the spatula 51 is rotated about the rotation center axis D in the rotation direction E by the rotation angle (720 degrees), and thus, the hand 25 is brought into the final attitude.

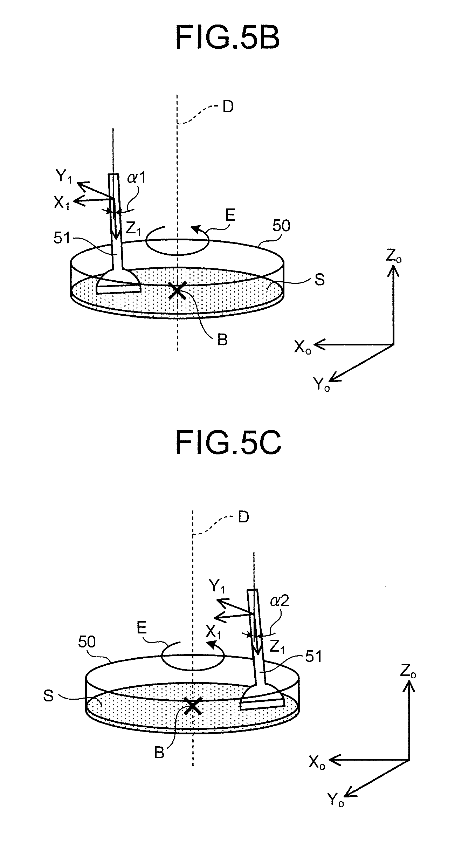

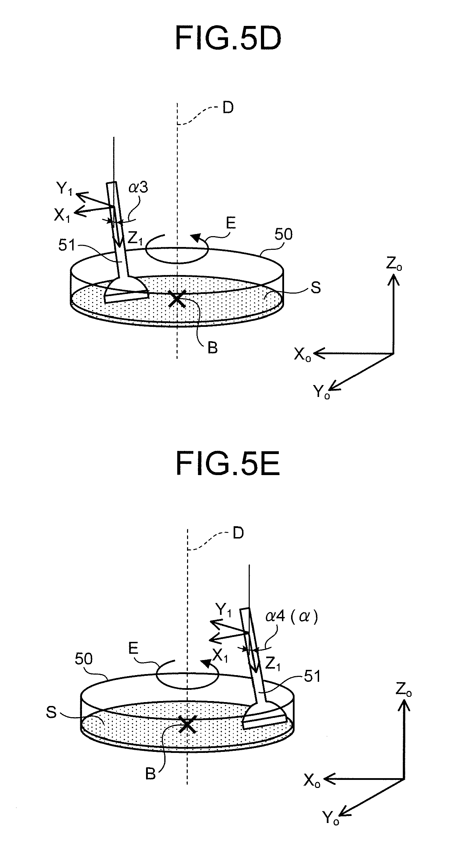

Specifically, as illustrated in FIG. 5B, a tilt angle α1 of the Z₁-axis direction of the hand 25 is set to 2.5 degrees with respect to the Z₀-axis direction when the spatula 51 has rotated about the rotation center axis D by 180 degrees. Subsequently, a tilt angle α2 of the hand 25 is set to 5 degrees when the spatula 51 has rotated about the rotation center axis D by 360 degrees as illustrated in FIG. 5C, and a tilt angle α3 of the hand 25 is set to 7.5 degrees when the spatula 51 has rotated about the rotation center axis D by 540 degrees (refer to FIG. 5D).

Then, as illustrated in FIG. 5E, the hand 25 is brought into the final attitude, that is, a tilt angle α4 (α) of the hand 25 is set to 10 degrees when the spatula 51 has rotated about the rotation center axis D by 720 degrees.

In this manner, in the operation of rotating the spatula 51, the teaching system 30 need not teach attitudes of the hand 25 in the process of the operation, and thereby can reduce the number of times of the teaching operation of the user, thus being capable of facilitating the operation of teaching the robot 20.

In the teaching system 30, the spatula 51 is rotated while being gradually tilted, and thereby can efficiently scrape the specimen S off the petri dish 50.

While FIGS. 5A to 5E illustrate the state in which the petri dish 50 is placed and fixed in an appropriate position of the top panel 14, the embodiments are not limited to this. Specifically, for example, one of the left and the right arms 23 and 24 may hold the spatula 51, and the other of the arms may hold the petri dish 50. The other arm may hold the petri dish 50 in a tilting manner, in which case the position of the rotation center axis teaching point C may be displaced corresponding to the tilt of the petri dish 50 so that the rotation center axis D is orthogonal to the bottom surface of the petri dish 50. This displaces the specimen S to an end of the bottom surface of the petri dish 50, and allows the displaced specimen S to be more efficiently scraped off by the spatula 51.

The spatula 51 has been described above to be used as a handled object. However, not limited to this, an object, such as a brush, that stirs or scrapes off the specimen S in the petri dish 50 may be used.

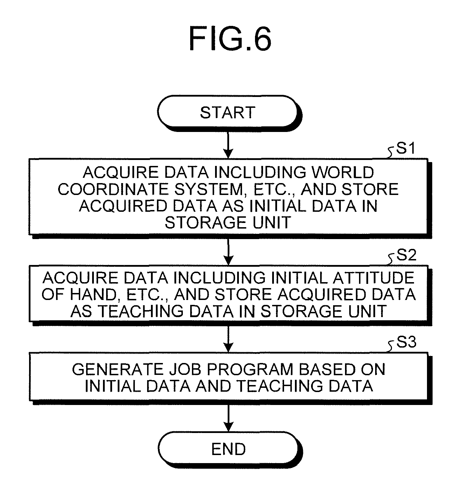

The following describes processing executed by the control unit 311 of the teaching system 30 according to the first embodiment with reference to FIG. 6. FIG. 6 is a flowchart illustrating a procedure of the processing executed by the teaching system 30.

As illustrated in FIG. 6, the control unit 311 first acquires the data including, for example, the world coordinate system, and stores the acquired data as the initial data 312b in the storage unit 312 (Step S1).

The control unit 311 then acquires the data including, for example, the initial and the final attitudes of the hand 25, the rotation center axis D of the spatula 51, and the rotation angle of the spatula 51 about the rotation center axis D, and stores the acquired data as the teaching data 312c in the storage unit 312 (Step S2). The control unit 311 then generates the job program for the robot 20 based on the initial data 312b and the teaching data 312c (Step S3).

As has been described above, the teaching system 30 according to the first embodiment includes the data acquiring unit 311d and the job generating unit 311e. The data acquiring unit 311d acquires the data including the initial and the final attitudes of the tool (hand 25), the rotation center axis D of the handled object (spatula 51), and the rotation angle of the handled object about the rotation center axis D in the robot 20 that performs the operation of holding and rotating the handled object with the tool. Based on the data acquired by the data acquiring unit 311d, the job generating unit 311e generates the job program that operates the actual robot 20 so that the tool is brought into the initial attitude, and then brought into the final attitude after the handled object is rotated about the rotation center axis D by the rotation angle. This can facilitate the operation of teaching the robot 20.

A second embodiment will be described below.

In the operation of scraping the petri dish 50 according to the first embodiment, the initial and the final attitudes of the tool, the rotation center axis D of the handled object, and the rotation angle of the handled object about the rotation center axis D constitute the teaching data 312c taught by the user.

Of these constituents of the teaching data 312c, for example, the initial attitude of the tool and the rotation center axis D of the handled object may be stored in the storage unit 312 as the initial data 312b that is set before the teaching operation, depending on the content of the operation performed by the robot 20. Such a configuration can further facilitate the teaching operation of the user.

The second embodiment will be described by way of a specific example of an operation of holding and rotating the test tube (handled object) 52 with the hand 25 to stir the specimen S in the test tube 52.

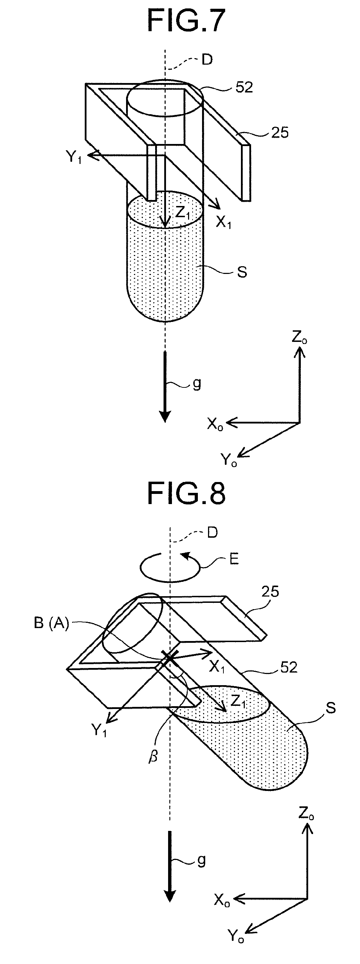

FIG. 7 is an explanatory diagram for explaining the setting of the initial data 312b performed before the user starts the teaching operation in the second embodiment. FIG. 7, and FIGS. 8, 10, and 11 to be explained later, illustrate virtual images displayed on the display unit 32, and omit the illustration of the left and the right arms 23 and 24, and the like, so as to simplify the diagrams.

As illustrated in FIG. 7, before the teaching operation of the user, the initial setting operator sets the initial attitude of the hand 25 represented by the tool coordinate system (X₁, Y₁, Z₁) and the rotation center axis D of the test tube 52 in addition to the world coordinate system (X₀, Y₀, Z₀) of the first embodiment.

More in detail, the initial setting operator brings the hand 25 holding the test tube 52 into the initial attitude in the virtual image displayed on the display unit 32. The data acquiring unit 311d acquires data representing the initial attitude of the hand 25. Then, after receiving the signal according to the initial setting operation of the initial setting operator from the operation accepting unit 311c, the data acquiring unit 311d stores the acquired data representing the initial attitude of the hand 25 as the initial data 312b in the storage unit 312.

In the example illustrated in FIG. 7, the tilt angle of the Z₁-axis direction of the hand 25 included in the initial attitude of the hand 25 is set to 0 degrees with respect to the Z₀-axis direction. In other words, the initial attitude of the hand 25 is set to an attitude in which the Z₁-axis direction is parallel to the Z₀-axis direction.

The initial setting operator operates the operating unit 33 to enter data representing a gravitational force direction g. The data acquiring unit 311d acquires an axis parallel to the entered gravitational force direction g as data representing the rotation center axis D of the test tube 52. The axis parallel to the gravitational force direction g is set as the rotation center axis D of the test tube 52 because by setting the gravitational force direction g as the rotation center axis, the specimen S is relatively difficult to be thrown out of the test tube 52 when the test tube 52 rotates.

The data acquiring unit 311d then stores the acquired data representing the rotation center axis D of the test tube 52 as the initial data 312b in the storage unit 312. Thus, the initial attitude of the hand 25 and the rotation center axis D are initially set prior to the teaching operation of the user.

After the initial data 312b is stored in the storage unit 312, the user performs the operation to teach the robot 20. FIG. 8 is an explanatory diagram of the teaching operation of the user in the operation of stirring the test tube 52.

As illustrated in FIG. 8, in the virtual image displayed on the display unit 32, the user moves the hand 25 so as to position the test tube 52 at a desired rotation center point B, and brings the hand 25 into the final attitude at the rotation center point B. In the example illustrated in FIG. 8, a tilt angle β of the hand 25 included in the final attitude of the hand 25 is set to 45 degrees.

The hand 25 starts the operation of stirring the test tube 52 after the control point has come to coincide with the rotation center point B. Hence, it can be said that the rotation center point B coincides with the start point A of the hand 25.

The data acquiring unit 311d acquires data representing the rotation center point B of the test tube 52 and the final attitude of the hand 25. Then, after receiving the signal according to the teaching setting operation of the user from the operation accepting unit 311c, the data acquiring unit 311d stores the acquired data representing the rotation center point B of the test tube 52 and the final attitude of the hand 25, as the teaching data 312c, in the storage unit 312.

The user further enters a desired rotation angle of the test tube 52 about the rotation center axis D via the operating unit 33. The rotation angle of the test tube 52 is set to, for example, 720 degrees here.

The data acquiring unit 311d acquires the rotation angle (here, 720 degrees) entered and taught by the user as data representing the rotation angle of the test tube 52, and stores the acquired data as the teaching data 312c in the storage unit 312.

The job generating unit 311e then generates a job program, for example, based on the initial attitude of the hand 25 and the rotation center axis D of the test tube 52 that serve as the initial data 312b, and on the final attitude of the hand 25 and the rotation angle of the test tube 52 about the rotation center axis D that serve as the teaching data 312c.

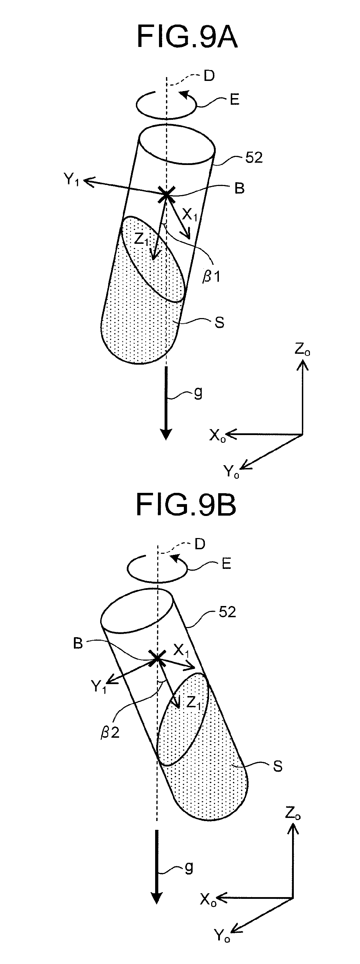

A description will be given of movements of the robot 20 controlled according to the content of the teaching given by a teaching system 30 according to the second embodiment, using FIGS. 7 and 9A to 9D. FIGS. 9A to 9D are explanatory diagrams for explaining the movements of the robot 20 based on the job program described above. To simplify the illustrations, FIGS. 9A to 9D illustrate only the tool coordinate system while omitting the illustration of the hand 25.

The hand 25 holding the test tube 52 is first brought into the initial attitude as illustrated in FIG. 7. Thereafter, as illustrated in FIGS. 9A to 9D, the test tube 52 is rotated about the rotation center axis D in the rotation direction E by the rotation angle (720 degrees), and thus, the hand 25 is brought into the final attitude.

Specifically, as illustrated in FIG. 9A, a tilt angle β1 of the hand 25 is set to 11.25 degrees, which corresponds to 25% of the tilt angle β in the final attitude, when the test tube 52 has rotated about the rotation center axis D by 180 degrees, which corresponds to 25% of the rotation angle.

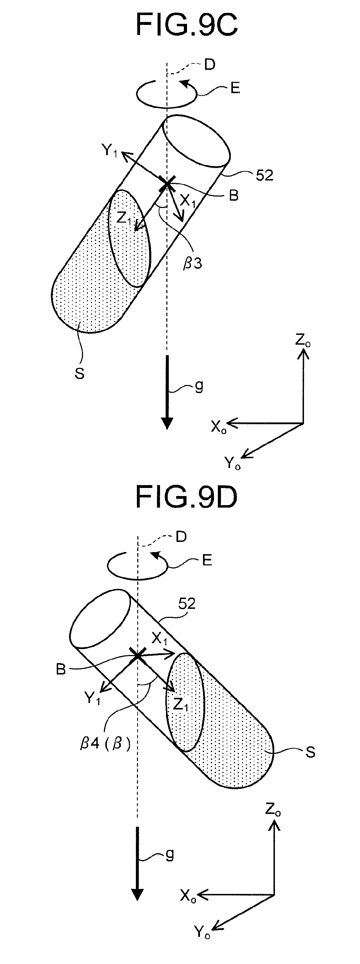

Subsequently, a tilt angle β2 of the hand 25 is set to 22.5 degrees when the test tube 52 has rotated about the rotation center axis D by 360 degrees as illustrated in FIG. 9B, and a tilt angle β3 of the hand 25 is set to 33.75 degrees when the test tube 52 has rotated about the rotation center axis D by 540 degrees as illustrated in FIG. 9C.

Then, as illustrated in FIG. 9D, the hand 25 is brought into the final attitude, that is, a tilt angle β4 (β) of the hand 25 is set to 45 degrees when the test tube 52 has rotated about the rotation center axis D by 720 degrees.

In this manner, in the second embodiment, the teaching operation of the user is completed by only teaching the final attitude of the hand 25 and the rotation angle of the test tube 52. This can further facilitate the teaching operation of the user. Other configurations and effects are the same as those of the first embodiment, so that descriptions thereof are omitted.

While the hand 25 holds and rotates the test tube 52 in the above description, this is merely an example, and the present embodiment is not limited to this example. For example, the hand 25 may hold and rotate the petri dish 50 or the like to stir the specimen S therein.

A third embodiment will be described below.

In the operation of stirring the test tube 52 according to the second embodiment, the axis parallel to the gravitational force direction g is set as the rotation center axis D of the test tube 52. However, depending on the content of the operation performed by the robot 20 or on the environment in which the handled object serving as a target of operation is placed, there are cases in which any other axis than that in the gravitational force direction g is preferably initially set as the rotation center axis D.

Hence, a teaching system 30 according to the third embodiment is configured to be capable of initially setting any axis as the rotation center axis D of the handled object. The third embodiment will be described by way of a specific example of an operation of holding and rotating in the beaker 54 the stirrer bar (handled object) 56 with the hand 25 to stir the specimen S in the beaker 54 with the stirrer bar 56.

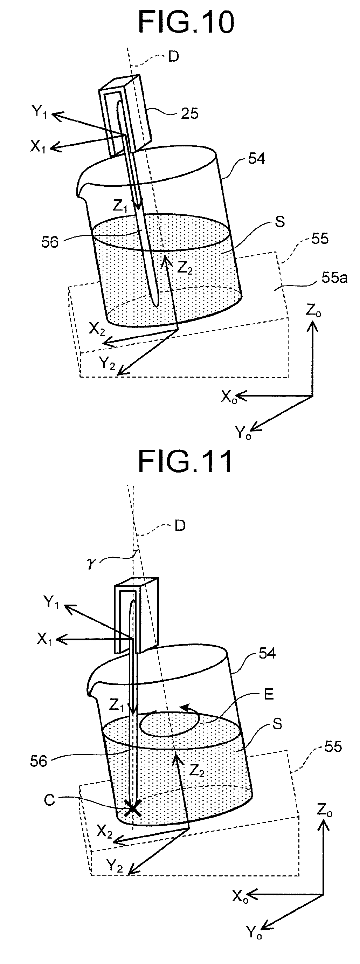

FIG. 10 is an explanatory diagram for explaining the setting of the initial data 312b performed before the user starts the teaching operation in the third embodiment. As illustrated in FIG. 10, the beaker 54 containing the specimen S is placed on the placing table 55 indicated by dashed lines. The placing table 55 is formed such that a placing surface 55a on which the beaker 54 is placed is inclined with respect to a horizontal plane.

In this manner, when the stirrer bar 56 stirs the specimen S in the beaker 54 placed on the placing table 55 having the inclined placing surface 55a, the rotation center axis D of the stirrer bar 56 is set corresponding to the inclination of the placing table 55 so as to efficiently stir the specimen S in the beaker 54.

To describe it more in detail, before the teaching operation of the user, the initial setting operator sets a user coordinate system in addition to the world coordinate system (X₀, Y₀, Z₀) and the initial attitude of the hand 25 represented by the tool coordinate system (X₁, Y₁, Z₁).

As illustrated in FIG. 10, the user coordinate system is a three-dimensional coordinate system represented by X₂, Y₂, and Z₂, and is a coordinate system that can be arbitrarily set. In this case, the user coordinate system is set to be the three-dimensional coordinate system in which the Z₂-axis direction is orthogonal to the placing surface 55a of the placing table 55, and passes through the center or approximately the center of the bottom surface of the beaker 54. The user coordinate system illustrated in FIG. 10 is merely an example, and the present embodiment is not limited to this example.

The data acquiring unit 311d acquires one axis of the user coordinate system (X₂, Y₂, Z₂) set by the initial setting operator, that is, the Z₂-axis in this case, as data representing the rotation center axis D of the stirrer bar 56. The data acquiring unit 311d then stores the acquired data representing the rotation center axis D of the stirrer bar 56 as the initial data 312b in the storage unit 312.

In the same manner as in the second embodiment, the initial setting operator brings the hand 25 holding the stirrer bar 56 into the initial attitude in the virtual image displayed on the display unit 32. The data acquiring unit 311d acquires data representing the initial attitude of the hand 25. Then, after receiving the signal according to the initial setting operation of the initial setting operator from the operation accepting unit 311c, the data acquiring unit 311d stores the acquired data representing the initial attitude of the hand 25 as the initial data 312b in the storage unit 312.

In the example illustrated in FIG. 10, the tilt angle of the Z₁-axis direction of the hand 25 included in the initial attitude of the hand 25 is set to 0 degrees with respect to the rotation center axis D. In other words, the initial attitude of the hand 25 is set to an attitude in which the Z₁-axis direction is parallel to the direction of the rotation center axis D. In the third embodiment, for the convenience of understanding, the rotation center axis D serves as a reference axis for the tilt angle of the hand 25.

Thus, the initial attitude of the hand 25 and the rotation center axis D of the stirrer bar 56 are initially set prior to the teaching operation of the user. After the initial data 312b is stored in the storage unit 312, the user performs the operation to teach the robot 20.

FIG. 11 is an explanatory diagram of the teaching operation of the user in the operation of stirring the beaker 54. As illustrated in FIG. 11, in the virtual image displayed on the display unit 32, the user moves the hand 25 so as to position the tip of the stirrer bar 56 at a desired arbitrary point C, and brings the hand 25 into the final attitude at the arbitrary point C. In the example illustrated in FIG. 11, a tilt angle γ of the hand 25 included in the final attitude of the hand 25 is set to 10 degrees.

The data acquiring unit 311d acquires data representing the final attitude of the hand 25. Then, after receiving the signal according to the teaching setting operation of the user from the operation accepting unit 311c, the data acquiring unit 311d stores the acquired data representing the final attitude of the hand 25 as the teaching data 312c in the storage unit 312.

The user further enters a desired rotation angle of the stirrer bar 56 about the rotation center axis D via the operating unit 33. The rotation angle of the stirrer bar 56 is set to, for example, 360 degrees here.

The data acquiring unit 311d acquires the rotation angle (here, 360 degrees) entered and taught by the user as data representing the rotation angle of the stirrer bar 56, and stores the acquired data as the teaching data 312c in the storage unit 312.

The job generating unit 311e then generates a job program, for example, based on the initial attitude of the hand 25 and the rotation center axis D of the stirrer bar 56 that serve as the initial data 312b, and on the final attitude of the hand 25 and the rotation angle of the stirrer bar 56 about the rotation center axis D that serve as the teaching data 312c.

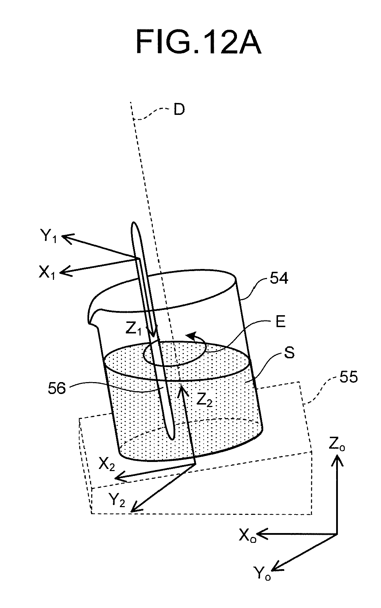

A description will be given of movements of the robot 20 controlled according to the content of the teaching given by the teaching system 30 according to the third embodiment, using FIGS. 12A to 12C. FIGS. 12A to 12C are explanatory diagrams for explaining the movements of the robot 20 based on the job program described above. To simplify the illustrations, FIGS. 12A to 12C illustrate only the tool coordinate system while omitting the illustration of the hand 25.

First, as illustrated in FIG. 12A, the hand 25 holding the stirrer bar 56 is brought into the initial attitude. Thereafter, the stirrer bar 56 is rotated about the rotation center axis D in the rotation direction E by the rotation angle (360 degrees), and thus, the hand 25 is brought into the final attitude.

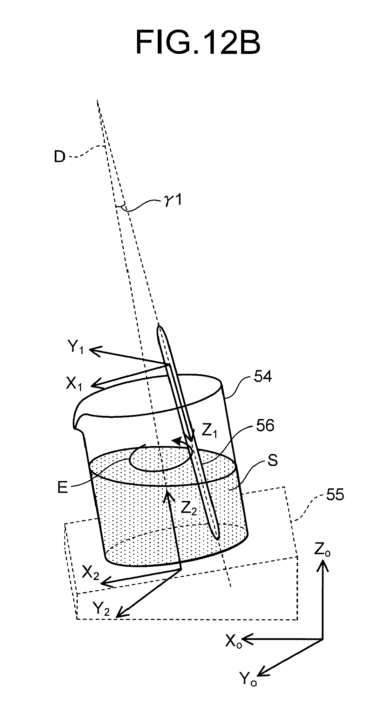

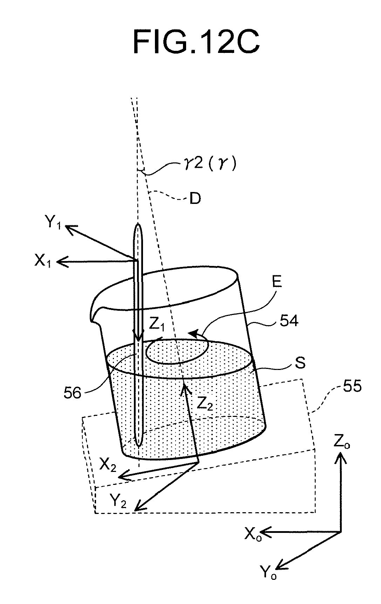

Specifically, as illustrated in FIG. 12B, a tilt angle γ1 of the hand 25 is set to 5 degrees, which corresponds to 50% of the tilt angle γ in the final attitude, when the stirrer bar 56 has rotated about the rotation center axis D by 180 degrees, which corresponds to 50% of the rotation angle. Subsequently, the hand 25 is brought into the final attitude, that is, a tilt angle γ2 (γ) of the hand 25 is set to 10 degrees, when the stirrer bar 56 has rotated about the rotation center axis D by 360 degrees as illustrated in FIG. 12C.

In this manner, in teaching system 30 according to the third embodiment, the rotation center axis D of the stirrer bar 56 is set to be the Z₂-axis of the user coordinate system that is the arbitrary three-dimensional coordinate system set in advance. This allows the stirrer bar 56 to rotate corresponding to the inclination of the placing table 55, for example, when the beaker 54 is placed on the inclined placing table 55, and thereby allows the specimen S in the beaker 54 to be efficiently stirred.

In the third embodiment, in the same manner as in the second embodiment, the teaching operation of the user is completed by only teaching the final attitude of the hand 25 and the rotation angle of the stirrer bar 56. This can further facilitate the teaching operation of the user.

The control point is offset from the rotation center axis D. This causes the stirrer bar 56 to rotate so as to move along a circular arc about the rotation center axis D. As a result, the stirrer bar 56 makes a large rotation in the beaker 54, and thus can more efficiently stir the specimen S in the beaker 54. Other configurations and effects are the same as those of the previous embodiments, so that descriptions thereof are omitted.

While the above embodiments have been described by exemplifying a configuration of what is called off-line teaching of performing the teaching operation using the virtual image displayed on the display unit 32, the teaching operation is not limited to this example. Specifically, for example, the teaching operation may be performed in such a manner that the user actually operates the robot 20 via a programming pendant (teaching pendant) (not illustrated) connected to the robot control device 40.

While the above description has been given of an example of an operation in the biomedical field, such as the operation of scraping the petri dish 50, the operation is not limited to this example, but may be any operation that holds and rotates a handled object with a tool.

While the above embodiments have been described by way of the example in which the robot 20 is the dual-arm robot having the left and the right arms 23 and 24, the robot 20 may be a single-arm robot or a multi-arm robot that has three or more arms.

## Claims

1. A teaching system (30) comprising:
a data acquiring unit (311d) that acquires data including an initial attitude of a tool (25), a final attitude of the tool (25), a rotation center axis of a handled object, and a rotation angle of the handled object about the rotation center axis, in a robot (20) that performs an operation of holding and rotating the handled object with the tool (25); and
a job generating unit (311e) that generates, based on the data acquired by the data acquiring unit (311d), a job program that operates the actual robot (20) so that the tool (25) is brought into the initial attitude, and then brought into the final attitude after the handled object is rotated by the rotation angle about the rotation center axis.

2. The teaching system (30) according to claim 1, wherein the data acquiring unit (311d) acquires, as the initial attitude of the tool (25), an attitude of the tool (25) defined by a tool coordinate system set in advance according to the tool (25).

3. The teaching system (30) according to claim 1 or 2, wherein, when a user has taught a start point of the handled object, a rotation center point of the handled object, and an arbitrary point other than the start point and the rotation center point,
the data acquiring unit (311d) acquires an axis obtained by connecting the rotation center point and the arbitrary point as the rotation center axis of the handled object; and
the job generating unit (311e) generates the job program so as to rotate the handled object in a plane that includes the start point and the rotation center point and meets the rotation center axis at a right angle, or in a plane parallel to the plane.

4. The teaching system (30) according to claim 1 or 2, wherein the data acquiring unit (311d) acquires, as the rotation center axis of the handled object, an axis parallel to a gravitational force direction set in advance.

5. The teaching system (30) according to claim 1 or 2, wherein the data acquiring unit (311d) acquires, as the rotation center axis of the handled object, one axis of an arbitrary three-dimensional coordinate system set in advance.

6. The teaching system (30) according to any one of claims 1 to 5, wherein the data acquiring unit (311d) acquires, as the final attitude of the tool (25), an attitude of the tool (25) at an arbitrary point taught by a user.

7. The teaching system (30) according to any one of claims 1 to 6, wherein the data acquiring unit (311d) acquires a rotation angle taught by a user as the rotation angle of the handled object.

8. The teaching system (30) according to any one of claims 1 to 7, wherein the rotation angle of the handled object is 360 degrees or larger.

9. A robot system (1) that performs the operation of holding and rotating the handled object with the tool (25) by operating the robot (20) according to the job program generated by the teaching system (30) according to any one of claims 1 to 8.

10. A teaching method comprising:
acquiring data including an initial attitude of a tool (25), a final attitude of the tool (25), a rotation center axis of a handled object, and a rotation angle of the handled object about the rotation center axis, in a robot (20) that performs an operation of holding and rotating the handled object with the tool (25); and
generating, based on the acquired data, a job program that operates the actual robot (20) so that the tool (25) is brought into the initial attitude, and then brought into the final attitude after the handled object is rotated by the rotation angle about the rotation center axis.
